# EUROPEAN PATENT APPLICATION

(11) **EP 3 208 997 A1**
(43) Date of publication of application: **23.08.2017**
(21) Application number: 15777456.3
(22) Date of filing: 25.02.2015
(51) Int. Cl.: H04L 29/08

(54) **METHOD AND DEVICE FOR UPDATING VIRTUAL DESKTOP**

(30) Priority: 15.10.2014 CN 201410545561
(71) Applicant: ZTE Corporation, Shenzhen, Guangdong 518057 (CN)
(72) Inventor: HU, Bo, Shenzhen Guangdong 518057 (CN)
(74) Representative: Mozzi, Matteo
(86) International application number: PCT/CN2015/073263
(87) International publication number: WO 2015/154592

(57) **Abstract**

Provided are methods and devices for updating a virtual desktop. When receiving a first scrolling command, a server calculates a first offset corresponding to the received first scrolling command (100), and sends the calculated first offset and a first scrolling direction contained in the received first scrolling command to a thin client (101). The server detects whether the server receives a second scrolling command within a preset time, and when the server does not receive the second scrolling command within the preset time, the server calculates first emerging pixel information according to a first image which is cached this time and an image which is sent to the thin client last time, and sends the calculated first emerging pixel information to the thin client (102). By the technical solution, bandwidth waste caused when the virtual desktop is updated is reduced.

## Description

### Technical Field

The present disclosure relates to a cloud computing technology, and more particularly to methods and devices for updating a virtual desktop.

### Background

A virtual desktop is an important application of cloud computing. A thin client refers to a computer terminal substantially in no need of any application program in a client-server network system. Compared with a conventional Personal Computer (PC) and notebook computer, a desktop of the thin client is replaced with a virtual desktop running in a remote data center. Contents in the virtual desktop are transmitted back to a screen of a user in the form of an image.

A related method for updating a virtual desktop is that: when the virtual desktop changes, a server sends an image corresponding to the changed virtual desktop to a thin client.

In this method for updating the virtual desktop, when the image corresponding to the virtual desktop partially changes, the server still sends the entire image corresponding to the changed virtual desktop to the thin client, so that a relatively larger bandwidth is occupied to cause bandwidth waste when the virtual desktop is updated.

### Summary

In order to solve the abovementioned problem, some embodiments of the present disclosure provide methods and devices for updating a virtual desktop, which may reduce bandwidth waste when the virtual desktop is updated, thereby saving a bandwidth.

An embodiment of the present disclosure provides a method for updating a virtual desktop, which may include the following acts.

When receiving a first scrolling command, a server calculates a first offset corresponding to the received first scrolling command.

The calculated first offset and a first scrolling direction contained in the received first scrolling command are sent to a thin client.

The server detects whether the server receives a second scrolling command within a preset time, and when the server does not receive the second scrolling command within the preset time, the server calculates first emerging pixel information according to a first image which is cached this time and an image which is sent to the thin client last time, and sends the calculated first emerging pixel information to the thin client.

In an exemplary embodiment, the method may further include the following acts.

When the server receives the second scrolling command within the preset time, the server caches a second image corresponding to a scrolling region of a current active window, judges, according to the second image and the first image, that the scrolling region of the current active window changes, calculates a second offset according to the second image and the first image, and sends the calculated second offset and a second scrolling direction contained in the received second scrolling command to the thin client.

The server may continue detecting whether the server receives a third scrolling command within the preset time.

In an exemplary embodiment, the method may further include the following acts.

When the server judges, according to the second image and the first image, that the scrolling region of the current active window does not change, the server calculates second emerging pixel information according to the second image and the image which is sent to the thin client last time, and sends the calculated second emerging pixel information to the thin client.

In an exemplary embodiment, the act that the offset corresponding to the received first scrolling command is calculated may include the following acts.

The first image corresponding to a scrolling region of a current active window is cached.

When the server judges, according to the first image which is cached this time and the image which is sent to the thin client last time, that the scrolling region of the current active window changes, the server calculates the first offset according to the first image which is cached this time and the image which is sent to the thin client last time.

In an exemplary embodiment, the act that the server judges, according to the first image which is cached this time and the image which is sent to the thin client last time, whether the scrolling region of the current active window changes or not may include the following acts.

The server checks whether or not each row or column of the image which is sent to the thin client last time matches a corresponding row or column of the first image, and when all rows or columns of the image which is sent to the thin client last time match corresponding rows or columns of the first image, the server judges that the scrolling region of the current active window does not change; and when a certain row or column of the image which is sent to the thin client last time does not match a corresponding row or column of the first image, the server judges that the scrolling region of the current active window changes.

In an exemplary embodiment, the act that the server calculates the first offset according to the first image and the image which is sent to the thin client last time may include the following acts.

The server judges that an image corresponding to the scrolling region is moved downwards or leftwards according to the first scrolling direction, and checks whether or not a first row or column of the image which is sent to the thin client last time matches an nth row or column of the first image. When the first row or column of the image which is sent to the thin client last time matches the nth row or column of the first image, the server checks whether or not second to (2+x)th rows or columns of the image which is sent to the thin client last time match (n+1)th to (n+1+x)th rows or columns of the first image. When all of the second to (2+x)th rows or columns of the image which is sent to the thin client last time match the (n+1)th to (n+1+x)th rows or columns of the first image, the server determines the first offset to be (n-1).

In the above embodiment, n may be a positive integer, and x may be a positive integer more than 2.

In an exemplary embodiment, the method may further include the following acts.

When the first row or column of the image which is sent to the thin client last time does not match the nth row or column of the first image, the server may continue checking whether or not the first row or column of the image which is sent to the thin client last time matches an (n+1)th row or column of the first image.

In an exemplary embodiment, the act that the server calculates the first offset according to the first image which is cached this time and the image which is sent to the thin client last time may include the following acts.

The server judges that an image corresponding to the scrolling region is moved upwards or moved rightwards according to the first scrolling direction, and checks whether or not an mth row or column of the image which is sent to the thin client last time matches the nth row or column of the first image. When the mth row or column of the image which is sent to the thin client last time matches the nth row or column of the first image, the server checks whether or not (m-1-x)th to (m-1)th rows or columns of the image which is sent to the thin client last time match (n-1-x)th to (n-1)th rows or columns of the first image. When all of the (m-1-x)th to (m-1)th rows or columns of the image which is sent to the thin client last time match the (n-1-x)th to (n-1)th rows or columns of the first image, the server determines the first offset to be (m-n).

In the above embodiment, n may be a positive integer, x may be a positive integer more than 2, m may be a total number of rows or columns of the image which is sent to the thin client last time, and m may be more than n.

In an exemplary embodiment, the method may further include the following acts.

When the mth row or column of the image which is sent to the thin client last time does not match the nth row or column of the first image, the server may continue checking whether or not the mth row or column of the image which is sent to the thin client last time matches an (n-1)th row or column of the first image.

In an exemplary embodiment, the act that the server calculates the first emerging pixel information according to the first image which is cached this time and the image which is sent to the thin client last time may include the following acts.

The server judges that an image corresponding to the scrolling region is moved downwards or leftwards according to the first scrolling direction, and checks whether or not the first row or column of the image which is sent to the thin client last time matches the nth row or column of the first image. When the first row or column of the image which is sent to the thin client last time matches the nth row or column of the first image, the server determines the first emerging pixel information to be first to (n-1)th rows or columns of the first image. When the first row or column of the image which is sent to the thin client last time does not match the nth row or column of the first image, the server may continue checking whether or not the first row or column of the image which is sent to the thin client last time matches an (n+1)th row or column of the first image. When the first row or column of the image which is sent to the thin client last time does not match any row or column of the first image, the server determines the first emerging pixel information to be the first image, where n may be a positive integer, and x may be a positive integer more than 2.

In an exemplary embodiment, the act that the server calculates the first emerging pixel information according to the first image which is cached this time and the image which is sent to the thin client last time may include the following acts.

The server judges that an image corresponding to the scrolling region is moved upwards or moved rightwards according to the first scrolling direction, and checks whether or not the mth row or column of the image which is sent to the thin client last time matches the nth row or column of the first image. When the mth row or column of the image which is sent to the thin client last time matches the nth row or column of the first image, the server determines the first emerging pixel information to be the nth to mth rows or columns of the first image. When the mth row or column of the image which is sent to the thin client last time does not match the nth row or column of the first image, the server may continue checking whether or not the mth row or column of the image which is sent to the thin client last time matches an (n-1)th row or column of the first image. When the mth row or column of the image which is sent to the thin client last time does not match any row or column of the first image, the server determines the first emerging pixel information to be the first image, where m may be a total number of rows or columns of the image which is sent to the thin client last time, and m may be more than n.

In an exemplary embodiment, the act that the server calculates the second offset according to the second image and the first image may include the following acts.

The server judges that an image corresponding to the scrolling region is moved downwards or leftwards according to the second scrolling direction, and checks whether or not the first row or column of the first image matches an nth row or column of the second image. When the first row or column of the first image matches the nth row or column of the second image, the server checks whether or not second to (2+x)th rows or columns of the second image match (n+1)th to (n+1+x)th rows or columns of the first image. When all of the second to (2+x)th rows or columns of the second image match the (n+1)th to (n+1+x)th rows or columns of the first image, the server determines the second offset to be (n-1).

In the above embodiment, n may be a positive integer, and x may be a positive integer more than 2.

In an exemplary embodiment, the method may further include the following acts.

When the first row or column of the first image does not match the nth row or column of the second image, the server may continue checking whether or not the first row or column of the first image matches an (n+1)th row or column of the second image.

In an exemplary embodiment, the act that the server calculates the second offset according to the second image and the first image may include the following acts.

The server judges that an image corresponding to the scrolling region is moved upwards or moved rightwards according to the second scrolling direction, and checks whether or not an mth row or column of the first image matches the nth row or column of the second image. When the mth row or column of the first image matches the nth row or column of the second image, the server continues checks whether or not (m-1-x)th to (m-1)th rows or columns of the first image match (n-1-x)th to (n-1)th rows or columns of the second image. When all of the (m-1-x)th to (m-1)th rows or columns of the first image match the (n-1-x)th to (n-1)th rows or columns of the second image, the server determines the second offset to be (m-n), where n may be a positive integer, x may be a positive integer more than 2, m may be a total number of rows or columns of the first image, and m may be more than n.

In an exemplary embodiment, the method may further include the following acts.

When the mth row or column of the first image does not match the nth row or column of the second image,
the server may continue checking whether or not the mth row or column of the first image matches an (n-1)th row or column of the second image.

In an exemplary embodiment, the method may further include the following acts.

When a window in the virtual desktop changes from an inactive window into a current active window, the server acquires an application type of the current active window, and searches in locally stored application types for the application type of the current active window. When the application type of the current active window is found, the server caches an image corresponding to a scrolling region of the current active window, and sends the image corresponding to the scrolling region of the current active window to the thin client.

An embodiment of the present disclosure provides a computer program, which may include program instructions which, when executed by a server, enable the server to execute the abovementioned method.

An embodiment of the present disclosure provides a carrier carrying the computer program.

An embodiment of the present disclosure provides a method for updating a virtual desktop, which may include the following acts.

A thin client receives a first offset and a first scrolling direction from a server or receives a second offset and a second scrolling direction from a server, judges that a scrolling region of a current active window is moved downwards or upwards according to the received first scrolling direction or second scrolling direction, and uniformly moves downwards or upwards the scrolling region according to a judgment result until the number of rows moved downwards or upwards is equal to the received first offset or second offset.

In an exemplary embodiment, the method may further include the following acts.

When the thin client judges that the scrolling region of the current active window is moved leftwards or rightwards according to the received first scrolling direction or second scrolling direction, the thin client uniformly moves leftwards or rightwards the scrolling region according to a judgment result until the number of columns moved leftwards or rightwards is equal to the received first offset or second offset.

In an exemplary embodiment, the method may further include the following acts.

When the thin client receives first emerging pixel information or second emerging pixel information from the server, the received first emerging pixel information or second emerging pixel information is displayed on pixels emerging in an upward movement or downward movement or leftward movement or rightward movement process.

An embodiment of the present disclosure provides a computer program, which may include a program instruction, the program instruction being executed by a thin client to enable the thin client to execute the abovementioned method.

An embodiment of the present disclosure provides a carrier carrying the computer program.

An embodiment of the present disclosure provides a device for updating a virtual desktop, which may include a calculation module and a sending module.

The calculation module is arranged to, when receiving a first scrolling command, calculate a first offset corresponding to the received first scrolling command, detect whether a second scrolling command is received within a preset time, and when the second scrolling command is not received within the preset time, calculate first emerging pixel information according to a first image which is cached this time and an image which is sent to the thin client last time.

The sending module is arranged to send the calculated first offset and a first scrolling direction contained in the received first scrolling command to a thin client, and send the calculated first emerging pixel information to the thin client.

In an exemplary embodiment, the calculation module may be further arranged to:
when the second scrolling command is received within the preset time, cache a second image corresponding to a scrolling region of a current active window, judge, according to the second image and the first image, that the scrolling region of the current active window changes, calculate a second offset according to the second image and the first image, and
after the sending module sends the calculated second offset and a second scrolling direction contained in the received second scrolling command to the thin client, continue detecting whether a third scrolling command is received or not within the preset time.

The sending module may be further arranged to:
send the calculated second offset and the second scrolling direction contained in the received second scrolling command to the thin client.

In an exemplary embodiment, the calculation module may be further arranged to:
judge, according to the second image and the first image, that the scrolling region of the current active window does not change, and calculate second emerging pixel information according to the second image and the image which is sent to the thin client last time.

The sending module may be further arranged to:
send the calculated second emerging pixel information to the thin client.

In an exemplary embodiment, a function of the calculation module for calculating the first offset corresponding to the received first scrolling command may be arranged to:
cache the first image corresponding to a scrolling region of a current active window; and when it is judged, according to the first image which is cached this time and the image which is sent to the thin client last time, that the scrolling region of the current active window changes, calculate the first offset according to the first image which is cached this time and the image which is sent to the thin client last time.

In an exemplary embodiment, a function of the calculation module for judging, according to the first image which is cached this time and the image which is sent to the thin client last time, whether the scrolling region of the current active window changes or not may be arranged to:
check whether or not each row or column of the image which is sent to the thin client last time matches a corresponding row or column of the first image, and when all rows or columns of the image which is sent to the thin client last time match corresponding rows or columns of the first image, judge that the scrolling region of the current active window does not change; and when a certain row or column of the image which is sent to the thin client last time does not match a corresponding row or column of the first image, judge that the scrolling region of the current active window changes.

In an exemplary embodiment, a function of the calculation module for calculating the first offset according to the first image and the image which is sent to the thin client last time may be arranged to:
judge that an image corresponding to the scrolling region is moved downwards or leftwards according to the first scrolling direction, check whether or not a first row or column of the image which is sent to the thin client last time matches an nth row or column of the first image, when the first row or column of the image which is sent to the thin client last time matches the nth row or column of the first image, checks whether or not second to (2+x)th rows or columns of the image which is sent to the thin client last time match (n+1)th to (n+1+x)th rows or columns of the first image, and when all of the second to (2+x)th rows or columns of the image which is sent to the thin client last time match the (n+1)th to (n+1+x)th rows or columns of the first image, determine the first offset to be (n-1),
where n may be a positive integer, and x may be a positive integer more than 2.

In an exemplary embodiment, a function of the calculation module for calculating the first offset according to the first image and the image which is sent to the thin client last time may be arranged to:
judge that an image corresponding to the scrolling region is moved upwards or moved rightwards according to the first scrolling direction, check whether or not an mth row or column of the image which is sent to the thin client last time matches the nth row or column of the first image, when the mth row or column of the image which is sent to the thin client last time matches the nth row or column of the first image, check whether or not (m-1-x)th to (m-1)th rows or columns of the image which is sent to the thin client last time match (n-1-x)th to (n-1)th rows or columns of the first image, and when all of the (m-1-x)th to (m-1)th rows or columns of the image which is sent to the thin client last time match the (n-1-x)th to (n-1)th rows or columns of the first image, determine the first offset to be (m-n),
where n may be a positive integer, x may be a positive integer more than 2, m may be a total number of rows or columns of the image which is sent to the thin client last time, and m may be more than n.

In an exemplary embodiment, a function of the calculation module for calculating the first emerging pixel information according to the first image which is cached this time and the image which is sent to the thin client last time may be arranged to:
judge that an image corresponding to the scrolling region is moved downwards or leftwards according to the first scrolling direction, check whether or not a first row or column of the image which is sent to the thin client last time matches an nth row or column of the first image, and when the first row or column of the image which is sent to the thin client last time matches the nth row or column of the first image, determine the first emerging pixel information to be first to (n-1)th rows or columns of the first image; when the first row or column of the image which is sent to the thin client last time does not match the nth row or column of the first image, continue checking whether or not the first row or column of the image which is sent to the thin client last time matches an (n+1)th row or column of the first image; and when the first row or column of the image which is sent to the thin client last time does not match any row or column of the first image, determine the first emerging pixel information to be the first image, where n may be a positive integer, and x may be a positive integer more than 2.

In an exemplary embodiment, a function of the calculation module for calculating the first emerging pixel information according to the first image which is cached this time and the image which is sent to the thin client last time may be arranged to:
judge that an image corresponding to the scrolling region is moved upwards or moved rightwards according to the first scrolling direction, check whether or not the mth row or column of the image which is sent to the thin client last time matches the nth row or column of the first image, and when the mth row or column of the image which is sent to the thin client last time matches the nth row or column of the first image, determine the first emerging pixel information to be the nth to mth rows or columns of the first image; when the mth row or column of the image which is sent to the thin client last time does not match the nth row or column of the first image, continue checking whether or not the mth row or column of the image which is sent to the thin client last time matches an (n-1)th row or column of the first image; and when the mth row or column of the image which is sent to the thin client last time does not match any row or column of the first image, determine the first emerging pixel information to be the first image, where m may be a total number of rows or columns of the image which is sent to the thin client last time, and m may be more than n.

In an exemplary embodiment, a function of the calculation module for calculating the second offset according to the second image and the first image may be arranged to:
judge that an image corresponding to the scrolling region is moved downwards or leftwards according to the second scrolling direction, check whether or not a first row or column of the first image matches an nth row or column of the second image, when the first row or column of the first image matches the nth row or column of the second image, check whether or not second to (2+x)th rows or columns of the first image match (n+1)th to (n+1+x)th rows or columns of the second image, and when all of the second to (2+x)th rows or columns of the second image match the (n+1)th to (n+1+x)th rows or columns of the first image, determine the second offset to be (n-1),
where n may be a positive integer, and x may be a positive integer more than 2.

In an exemplary embodiment, a function of the calculation module for calculating the second offset according to the second image and the first image may be arranged to:
judge that an image corresponding to the scrolling region is moved upwards or moved rightwards according to the second scrolling direction, check whether or not an mth row or column of the first image matches the nth row or column of the second image, when the mth row or column of the first image matches the nth row or column of the second image, check whether or not (m-1-x)th to (m-1)th rows or columns of the first image match (n-1-x)th to (n-1)th rows or columns of the second image, and when all of the (m-1-x)th to (m-1)th rows or columns of the first image match the (n-1-x)th to (n-1)th rows or columns of the second image, determine the second offset to be (m-n), where n may be a positive integer, x may be a positive integer more than 2, m may be a total number of rows or columns of the first image, and m may be more than n.

In an exemplary embodiment, the calculation module may be further arranged to:
detect that a window in the virtual desktop changes from an inactive window into a current active window, acquire an application type of the current active window, and search in locally stored application types for the application type of the current active window, and when the application type of the current active window is found, cache an image corresponding to a scrolling region of the current active window, and send the image corresponding to the scrolling region of the current active window to the thin client.

An embodiment of the present disclosure provides a device for updating a virtual desktop, which may include a receiving module and a movement module.

The receiving module is arranged to receive a first offset and a first scrolling direction or a second offset and a second scrolling direction from a server.

The movement module is arranged to judge that a scrolling region of a current active window is moved downwards or upwards according to the received first scrolling direction or second scrolling direction, and uniformly move downwards or upwards the scrolling region according to a judgment result until the number of rows moved downwards or upwards is equal to the received first offset or second offset.

In an exemplary embodiment, the movement module may be further arranged to:
judge that the scrolling region of the current active window is moved leftwards or rightwards according to the received first scrolling direction or second scrolling direction, and uniformly move leftwards or rightwards the scrolling region according to a judgment result until the number of columns moved leftwards or rightwards is equal to the received first offset or second offset.

In an exemplary embodiment, the receiving module may be further arranged to:
receive first emerging pixel information or second emerging pixel information from the server.

The device for updating the virtual desktop may further include a display module.

The display module is arranged to display the received first emerging pixel information or second emerging pixel information on pixels emerging in an upward movement or downward movement or leftward movement or rightward movement process.

Compared with a related method for updating a virtual desktop, the embodiments of the present disclosure adopt the following technical solutions. When receiving the first scrolling command, the server calculates the first offset corresponding to the received first scrolling command, and sends the calculated first offset and the first scrolling direction contained in the received first scrolling command to the thin client. The server detects whether the second scrolling command is received or not within the preset time, and when the server does not receive the second scrolling command within the preset time, the server calculates the first emerging pixel information according to the first image which is cached this time and the image which is sent to the thin client last time, and sends the calculated first emerging pixel information to the thin client. According to the solutions of the embodiments of the present disclosure, when receiving the first scrolling command, the server only sends the first offset and the first scrolling direction to the thin client, and then continues detecting whether the second scrolling command is received or not within the preset time. When the server does not receive the second scrolling command within the preset time, the server calculates the first emerging pixel information according to the first image which is cached this time and the image which is sent to the thin client last time, and sends the calculated first emerging pixel information to the thin client. By virtue of the technical solution, it is not necessary send an image corresponding to the changed virtual desktop to the thin client every time when a scrolling command is received, so that bandwidth waste for the virtual desktop is reduced, and a bandwidth is further saved.

### Brief Description of the Drawings

Fig. 1 is a flowchart of a method, applied to a server, for updating a virtual desktop according to an embodiment of the present disclosure;
Fig. 2 is a flowchart of a method for updating a virtual desktop according to an embodiment of the present disclosure;
Fig. 3 is a structure diagram of a device for updating a virtual desktop according to an embodiment of the present disclosure; and
Fig. 4 is a structure diagram of another device for updating a virtual desktop according to an embodiment of the present disclosure.

### Detailed Description of the Embodiments

For facilitating understanding of those skilled in the art, the embodiments of the present disclosure will be described below with reference to the drawings and not intended to limit the scope of protection of the present disclosure.

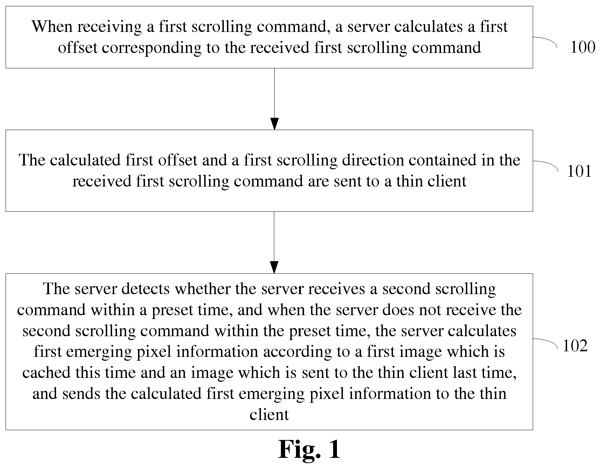

Referring to Fig. 1, an embodiment of the present disclosure provides a method for updating a virtual desktop, which may be applied to a server and may include the following acts.

At act 100, when receiving a first scrolling command, the server calculates a first offset corresponding to the received first scrolling command.

In the act 100, the act that the server calculates the first offset corresponding to the received first scrolling command may include the following acts.

The server caches a first image corresponding to a scrolling region of a current active window. The server judges that the scrolling region of the current active window changes according to the first image which is cached this time and an image which is sent to a thin client last time. The server calculates the first offset according to the first image which is cached this time and the image which is sent to the thin client last time.

In the act 100, the first scrolling command may be, for example, a mouse middle button command, or a mouse movement followed with a mouse left button pressing command, or a slide of a finger on a touch screen and the like. The first scrolling command may further contain a first scrolling direction.

In the act 100, if the server does not receive any scrolling command, this flow is ended.

When the server judges that the scrolling region of the current active window does not change, this flow is ended.

As an exemplary embodiment, the act that the server judges, according to the first image which is cached this time and the image which is sent to the thin client last time, whether the scrolling region of the current active window changes or not may include the following acts.

The server checks whether or not each row (or column) of the image which is sent to the thin client last time matches a corresponding row (or column) of the first image which is cached this time. When all rows (or columns) of the image which is sent to the thin client last time match corresponding rows (or columns) of the first image which is cached this time, the server judges that the scrolling region of the current active window does not change. When a certain row (or column) of the image which is sent to the thin client last time does not match the corresponding row (or column) of the first image which is cached this time, the server judges that the scrolling region of the current active window changes.

A certain row (or column) of the image which is sent to the thin client last time may be checked to match the corresponding row (or column) of the first image which is cached this time under the following condition: each pixel of the certain row (or column) of the image which is sent to the thin client last time is the same as a corresponding pixel of the corresponding row (or column) of the first image which is cached this time.

The act that the server calculates the first offset according to the first image which is cached this time and the image which is sent to the thin client last time may include the following acts.

The server judges that an image corresponding to the scrolling region is moved downwards (or moved leftwards) according to the first scrolling direction, and checks whether or not a first row (or column) of the image which is sent to the thin client last time matches an nth row (or column) of the first image which is cached this time. When the first row (or column) of the image which is sent to the thin client last time matches the nth row (or column) of the first image which is cached this time, the server checks whether or not second to (2+x)th rows (or columns) of the image which is sent to the thin client last time match (n+1)th to (n+1+x)th rows (or columns) of the first image which is cached this time. When the second to (2+x)th rows (or columns) of the image which is sent to the thin client last time match the (n+1)th to (n+1+x)th rows (or columns) of the first image which is cached this time, the server determines the first offset to be (n-1), where n is a positive integer, and x is a positive integer more than 2.

As an implementation, the first row (or column) of the image which is sent to the thin client last time may be checked to match the nth row (or column) of the first image which is cached this time under the following condition: each pixel of the first row (or column) of the image which is sent to the thin client last time is the same as a corresponding pixel of the nth row (or column) of the first image which is cached this time.

When the first row (or column) of the image which is sent to the thin client last time does not match the nth row (or column) of the first image which is cached this time, the server may continue checking whether or not the first row (or column) of the image which is sent to the thin client last time matches the (n+1)th row (or column) of the first image which is cached this time.

The server judges that an image corresponding to the scrolling region is moved upwards (or moved rightwards) according to the first scrolling direction, and checks whether or not an mth row (or column) of the image which is sent to the thin client last time matches the nth row (or column) of the first image which is cached this time. When the mth row (or column) of the image which is sent to the thin client last time matches the nth row (or column) of the first image which is cached this time, the server checks whether or not (m-1-x)th to (m-1)th rows (or columns) of the image which is sent to the thin client last time match (n-1-x)th to (n-1)th rows (or columns) of the first image which is cached this time. When all of the (m-1-x)th to (m-1)th rows (or columns) of the image which is sent to the thin client last time match the (n-1-x)th to (n-1)th rows (or columns) of the first image which is cached this time, the server determines the first offset to be (m-n), where n is a positive integer, x is a positive integer more than 2, and m is a total row (or column) number of the image which is sent to the thin client last time.

When the mth row (or column) of the image which is sent to the thin client last time does not match the nth row (or column) of the first image which is cached this time, the server may continue checking whether or not the mth row (or column) of the image which is sent to the thin client last time matches the (n-1)th row (or column) of the first image which is cached this time.

At act 101, the server sends the calculated first offset and the first scrolling direction contained in the received first scrolling command to the thin client.

At act 102, the server detects whether the server receives a second scrolling command within a preset time, and when the server does not receive the second scrolling command within the preset time, the server calculates first emerging pixel information according to the first image which is cached this time and the image which is sent to the thin client last time, and sends the calculated first emerging pixel information to the thin client.

In the act 102, when the server receives the second scrolling command within the preset time, the server caches a second image corresponding to the scrolling region of the current active window, judges, according to the second image and the first image, that the scrolling region of the current active window changes, calculates a second offset according to the second image and the first image, and sends the calculated second offset and a second scrolling direction contained in the received second scrolling command to the thin client. Then the server may continue detecting whether the server receives a third scrolling command within the preset time.

When the server judges, according to the second image and the first image, that the scrolling region of the current active window does not change, the server calculates second emerging pixel information according to the second image and the image which is sent to the thin client last time, and sends the calculated second emerging pixel information to the thin client.

In the act 102, the act that the server calculates the first emerging pixel information according to the first image which is cached this time and the image which is sent to the thin client last time may include the following acts.

The server judges that an image corresponding to the scrolling region is moved downwards (or moved leftwards) according to the first scrolling direction, and checks whether or not the first row (or column) of the image which is sent to the thin client last time matches the nth row (or column) of the first image which is cached this time. When the first row (or column) of the image which is sent to the thin client last time matches the nth row (or column) of the first image which is cached this time, the server determines the first emerging pixel information to be first to (n-1)th rows (or columns) of the image which is cached this time. When the first row (or column) of the image which is sent to the thin client last time does not match the nth row (or column) of the first image which is cached this time, the server may continue checking whether or not the first row (or column) of the image which is sent to the thin client last time matches the (n+1)th row (or column) of the first image which is cached this time. When the first row (or column) of the image which is sent to the thin client last time does not match any row (or column) of the first image which is cached this time, the server determines the first emerging pixel information to be the image which is cached this time, where n is a positive integer.

The server judges that an image corresponding to the scrolling region is moved upwards (or moved rightwards) according to the first scrolling direction, and checks whether or not the mth row (or column) of the image which is sent to the thin client last time matches the nth row (or column) of the first image which is cached this time. When the mth row (or column) of the image which is sent to the thin client last time matches the nth row (or column) of the first image which is cached this time, the server determines the first emerging pixel information to be the nth to mth rows (or columns) of the image which is cached this time. When the mth row (or column) of the image which is sent to the thin client last time does not match the nth row (or column) of the first image which is cached this time, the server may continue checking whether or not the mth row (or column) of the first image which is sent to the thin client last time matches the (n-1)th row (or column) of the image which is cached this time. When the mth row (or column) of the image which is sent to the thin client last time does not match any row (or column) of the first image which is cached this time, the server determines the first emerging pixel information to be the image which is cached this time, where m is the total row (or column) number of the image which is sent to the thin client last time.

In the act 102, when the server does receives the second scrolling command within the preset time, the server caches the second image corresponding to the scrolling region of the current active window, judges, according to the second image and the first image, that the scrolling region of the current active window changes, calculates the second offset according to the second image and the first image, and sends the calculated second offset and the second scrolling direction contained in the received second scrolling command to the thin client. Then, the server may continue detecting whether the third scrolling command is received or not within the preset time.

When the server judges, according to the second image and the first image, that the scrolling region of the current active window does not change, the server calculates second emerging pixel information according to the second image and the image which is sent to the thin client last time, and sends the calculated second emerging pixel information to the thin client.

As an exemplary embodiment, the act that the server judges whether the scrolling region of the current active window changes or not according to the second image which is cached this time and the first image may include the following acts.

The server checks whether or not each row (or column) of the second image matches a corresponding row (or column) of the first image which is cached this time, and when all rows (or columns) of the second image match corresponding rows (or column) of the first image which is cached this time, the server judges that the scrolling region of the current active window does not change. When a certain row (or column) of the second image does not match the corresponding row (or column) of the first image which is cached this time, the server judges that the scrolling region of the current active window changes.

As an implementation, the certain row (or column) of the second image may be checked to match the corresponding row (or column) of the first image which is cached this time under a following condition: each pixel of the certain row (or column) of the second image is the same as a corresponding pixel of the corresponding row (or column) of the first image which is cached this time.

As an exemplary embodiment, the act that the server calculates the second offset according to the second image and the first image may include the following acts.

The server judges that an image corresponding to the scrolling region is moved downwards (or moved leftwards) according to the second scrolling direction, and checks whether or not the first row (or column) of the first image matches an nth row (or column) of the second image. When the first row (or column) of the first image matches the nth row (or column) of the second image, the server checks whether or not second to (2+x)th rows (or columns) of the first image match (n+1)th to (n+1+x)th rows (or columns) of the second image. When all of the second to (2+x)th rows (or columns) of the first image match the (n+1)th to (n+1+x)th rows (or columns) of the second image, the server determines the second offset to be (n-1).

As an implementation, the first row (or column) of the first image may be checked to match the nth row (or column) of the second image under a following condition: each pixel of the first row (or column) of the first image is the same as a corresponding pixel of the nth row (or column) of the second image.

When the first row (or column) of the first image does not match the nth row (or column) of the second image, the server may continue checking whether or not the first row (or column) of the first image matches an (n+1)th row (or column) of the second image.

The server judges that an image corresponding to the scrolling region is moved upwards (or moved rightwards) according to the second scrolling direction, and checks whether or not an mth row (or column) of the first image matches the nth row (or column) of the second image. When the mth row (or column) of the first image matches the nth row (or column) of the second image, the server checks whether or not (m-1-x)th to (m-1)th rows (or columns) of the first image match (n-1-x)th to (n-1)th rows (or columns) of the second image. When all of the (m-1-x)th to (m-1)th rows (or columns) of the first image match the (n-1-x)th to (n-1)th rows (or columns) of the second image, the server determines the second offset to be (m-n), where n is a positive integer, x is a positive integer more than 2, m is a total row (or column) number of the first image, and m is more than n.

When the mth row (or column) of the first image does not match the nth row (or column) of the second image, the server may continue checking whether or not the mth row (or column) of the first image matches the (n-1)th row (or column) of the second image.

When a window in the virtual desktop changes from an inactive window into a current active window, the method of the embodiment of the present disclosure may further include the following acts.

The server acquires an application type of the current active window, and searches in locally stored application types for the application type of the current active window. When the application type of the current active window is found, the server caches an image corresponding to a scrolling region of the current active window, and sends the image corresponding to the scrolling region of the current active window to the thin client.

When the application type of the current active window is not found, the server may send the image corresponding to a changed screen to the thin client by adopting a related method for updating a virtual desktop.

As an exemplary embodiment, the application type of the current active window may be acquired from a character string in a title of the current active window.

As an exemplary embodiment, the application type may be, for example, Microsoft Word, or Microsoft Excel, or notepad, browser or the like.

An embodiment of the present disclosure provides a method for updating a virtual desktop, which may be applied to a thin client and may include the following acts.

A thin client receives a first offset and a first scrolling direction from a server or receives a second offset and a second scrolling direction from a server, judges that a scrolling region of a current active window is moved downwards (or moved upwards) according to the received first scrolling direction or second scrolling direction, and uniformly moves downwards (or moves upwards) the scrolling region until the number of rows moved downwards (or moved upwards) is equal to the received first offset or second offset.

When the thin client judges that the scrolling region of the current active window is moved rightwards (or moved leftwards) according to the received first scrolling direction or second scrolling direction, the thin client uniformly moves rightwards (or moved leftwards) the scrolling region until the number of columns moved rightwards (or moved leftwards) is equal to the received first offset or second offset.

In a downward movement (or upward movement) process, pixels emerging above (or below) the scrolling region may be filled with a pure color (for example, white). In a leftward movement (or rightward movement) process, pixels emerging on the left (or right) of the scrolling region may be filled with a pure color (for example, white).

When the thin client receives first emerging pixel information or second emerging pixel information from the server, the method may further include the following acts.

The received first emerging pixel information or second emerging pixel information is displayed on pixels emerging in the upward movement or downward movement or leftward movement or rightward movement process.

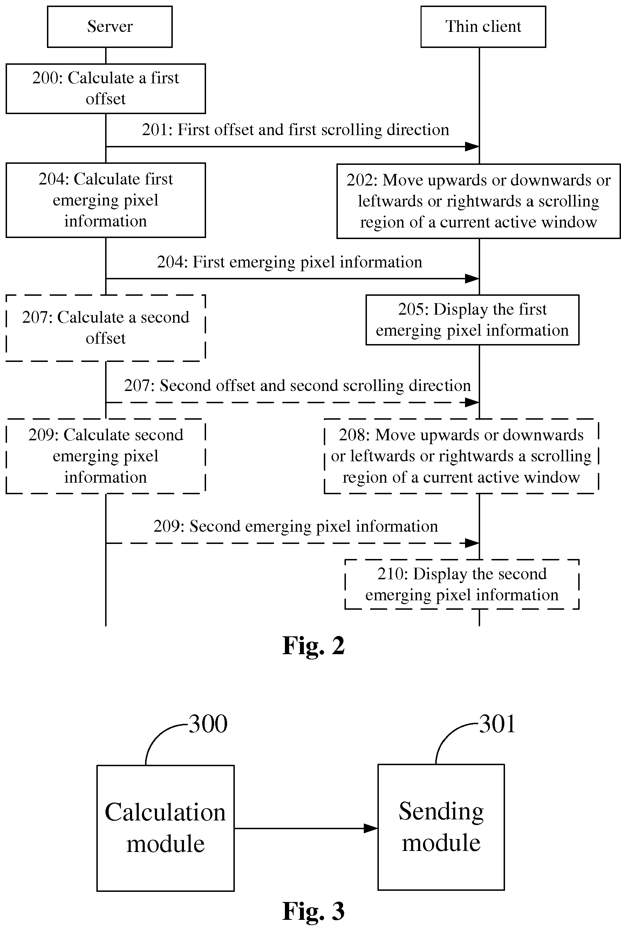

The method of the present disclosure will be described below in detail through an embodiment. Referring to Fig. 2, the method includes the following acts.

At act 200, when receiving a first scrolling command, a server calculates a first offset corresponding to the received first scrolling command.

At act 201, the server sends the calculated first offset and a first scrolling direction contained in the received first scrolling command to a thin client.

At act 202, the thin client receives the first offset and the first scrolling direction, judges that a scrolling region of a current active window is moved upwards or downwards according to the received first scrolling direction, and uniformly moves upwards or moves downwards the scrolling region until the number of rows moved upwards or moved downwards is equal to the received first offset.

In the act 202, when the thin client judges that the scrolling region of the current active window is moved leftwards or rightwards according to the received first scrolling direction, the thin client uniformly moves leftwards or rightwards the scrolling region until the number of columns moved leftwards or moved rightwards is equal to the received first offset.

At act 203, the server detects whether the server receives a second scrolling command within a preset time, executes act 204 when the server does not receive the second scrolling command within the preset time, and executes act 206 when the server does receives the second scrolling command within the preset time.

At act 204, the server calculates first emerging pixel information according to a first image which is cached this time and an image which is sent to the thin client last time, and sends the calculated first emerging pixel information to the thin client.

At act 205, the thin client displays the received first emerging pixel information on pixels emerging in an upward movement or downward movement or leftward movement or rightward movement process.

At act 206, the server caches a second image corresponding to the scrolling region of the current active window, judges, according to the second image and the first image, whether the scrolling region of the current active window changes or not, executes act 207 if the scrolling region of the current active window changes, and executes act 209 if the scrolling region of the current active window does not change.

At act 207, the server calculates a second offset according to the second image and the first image, sends the calculated second offset and a second scrolling direction contained in the received second scrolling command to the thin client, and act 203 is executed.

At act 208, the thin client receives the second offset and the second scrolling direction, judges whether the scrolling region of the current active window is moved upwards or downwards according to the received second scrolling direction, and uniformly moves upwards or moves downwards the scrolling region until the number of rows moved upwards or moved downwards is equal to the received second offset.

In the act 208, when the thin client judges that the scrolling region of the current active window is moved leftwards or rightwards according to the received second scrolling direction, the thin client uniformly moves leftwards or rightwards the scrolling region until the number of columns moved leftwards or moved rightwards is equal to the received second offset.

At act 209, the server calculates second emerging pixel information according to the second image and the image which is sent to the thin client last time, and sends the calculated second emerging pixel information to the thin client.

At act 210, the thin client displays the received second emerging pixel information on pixels emerging in the upward movement or downward movement or leftward movement or rightward movement process.

Referring to Fig. 3, an embodiment of the present disclosure provides a device for updating a virtual desktop, which may at least include a calculation module 300 and a sending module 301.

The calculation module 300 is arranged to, when receiving a first scrolling command, calculate a first offset corresponding to the received first scrolling command, detect whether a second scrolling command is received within a preset time, and when the second scrolling command is not received within the preset time, calculate first emerging pixel information according to a first image which is cached this time and an image which is sent to the thin client last time.

The sending module 301 is arranged to send the calculated first offset and a first scrolling direction contained in the received first scrolling command to a thin client, and send the calculated first emerging pixel information to the thin client.

In the device of the embodiment of the present disclosure, the calculation module 300 is further arranged to:
when the second scrolling command is received within the preset time, cache a second image corresponding to a scrolling region of a current active window, judge, according to the second image and the first image, that the scrolling region of the current active window changes, and calculate a second offset according to the second image and the first image.

After the sending module 301 sends the calculated second offset and a second scrolling direction contained in the received second scrolling command to the thin client, the calculation module 300 is further arranged to:
continue detecting whether a third scrolling command is received or not within the preset time.

The sending module 301 is further arranged to:
send the calculated second offset and the second scrolling direction contained in the received second scrolling command to the thin client.

In the device of the embodiment of the present disclosure, the calculation module 300 is further arranged to:
judge, according to the second image and the first image, that the scrolling region of the current active window does not change, and calculate second emerging pixel information according to the second image and the image which is sent to the thin client last time.

The sending module 301 is further arranged to:
send the calculated second emerging pixel information to the thin client.

In the device of the embodiment of the present disclosure, a function of the calculation module 300 for calculating the first offset corresponding to the received first scrolling command may be arranged to:
cache the first image corresponding to a scrolling region of a current active window; and when it is judged, according to the first image which is cached this time and the image which is sent to the thin client last time, that the scrolling region of the current active window changes, calculate the first offset according to the first image which is cached this time and the image which is sent to the thin client last time.

In the device of the embodiment of the present disclosure, a function of the calculation module 300 for judging whether the scrolling region of the current active window changes or not according to the first image and the image which is sent to the thin client last time may be arranged to:
check whether or not each row (or column) of the image which is sent to the thin client last time matches a corresponding row (or column) of the first image, and when all rows or columns of the image which is sent to the thin client last time match corresponding rows or columns of the first image, judge that the scrolling region of the current active window does not change; and when a certain row (or column) of the image which is sent to the thin client last time does not match a corresponding row (or column) of the first image, judge that the scrolling region of the current active window changes.

In the device of the embodiment of the present disclosure, a function of the calculation module 300 for calculating the second offset according to the second image and the first image may be arranged to:
judge that an image corresponding to the scrolling region is moved downwards (or moved leftwards) according to the second scrolling direction, check whether or not a first row (or column) of the first image matches an nth row (or column) of the second image, when the first row (or column) of the first image matches the nth row (or column) of the second image, check whether or not second to (2+x)th rows (or columns) of the first image match (n+1)th to (n+1+x)th rows (or columns) of the second image, and when all of the second to (2+x)th rows (or columns) of the first image match the (n+1)th to (n+1+x)th rows (or columns) of the second image, determine the second offset to be (n-1),
where n is a positive integer, and x is a positive integer more than 2.

In the device of the embodiment of the present disclosure, a function of the calculation module 300 for calculating the second offset according to the second image and the first image may be arranged to:
judge that an image corresponding to the scrolling region is moved upwards (or moved rightwards) according to the second scrolling direction, check whether or not an mth row (or column) of the first image matches the nth row (or column) of the second image, when the mth row (or column) of the first image matches the nth row (or column) of the second image, check whether or not (m-1-x)th to (m-1)th rows (or columns) of the first image match (n-1-x)th to (n-1)th rows (or columns) of the second image, and when all of the (m-1-x)th to (m-1)th rows (or columns) of the first image match the (n-1-x)th to (n-1)th rows (or columns) of the second image, determine the second offset to be (m-n), where n is a positive integer, x is a positive integer more than 2, m is a total row (or column) number of the first image, and m is more than n.

In the device of the embodiment of the present disclosure, a function of the calculation module 300 for judging whether the scrolling region of the current active window changes or not according to the first image and the image which is sent to the thin client last time may be arranged to:
check whether or not each row (or column) of the image which is sent to the thin client last time matches a corresponding row (or column) of the first image, and when all rows or columns of the image which is sent to the thin client last time match corresponding rows (or columns) of the first image, judge that the scrolling region of the current active window does not change; and when a certain row (or column) of the image which is sent to the thin client last time does not match the corresponding row (or column) of the first image, judge that the scrolling region of the current active window changes.

In the device of the embodiment of the present disclosure, a function of the calculation module 300 for calculating the first offset according to the first image and the image which is sent to the thin client last time may be arranged to:
judge that an image corresponding to the scrolling region is moved downwards (or moved leftwards) according to the first scrolling direction, check whether or not a first row (or column) of the image which is sent to the thin client last time matches an nth row (or column) of the first image, when the first row (or column) of the image which is sent to the thin client last time matches the nth row (or column) of the first image, check whether or not second to (2+x)th rows (or columns) of the image which is sent to the thin client last time match (n+1)th to (n+1+x)th rows (or columns) of the first image, and when all of the second to (2+x)th rows (or columns) of the image which is sent to the thin client last time match the (n+1)th to (n+1+x)th rows (or columns) of the first image, determine the first offset to be (n-1),
where n is a positive integer, and x is a positive integer more than 2.

In the device of the embodiment of the present disclosure, a function of the calculation module 300 for calculating the first offset according to the first image and the image which is sent to the thin client last time may be arranged to:
judge that an image corresponding to the scrolling region is moved upwards (or moved rightwards) according to the first scrolling direction, check whether or not an mth row (or column) of the image which is sent to the thin client last time matches the nth row (or column) of the first image, when the mth row (or column) of the image which is sent to the thin client last time matches the nth row (or column) of the first image, check whether or not (m-1-x)th to (m-1)th rows (or columns) of the image which is sent to the thin client last time match (n-1-x)th to (n-1)th rows (or columns) of the first image, and when all of the (m-1-x)th to (m-1)th rows (or columns) of the image which is sent to the thin client last time match the (n-1-x)th to (n-1)th rows (or columns) of the first image, determine the first offset to be (m-n),
where n is a positive integer, x is a positive integer more than 2, m is a total row (or column) number of the image which is sent to the thin client last time, and m is more than n.

In the device of the embodiment of the present disclosure, the calculation module 300 is further arranged to:
when no scrolling command is received within the preset time or a judgment module judges that the scrolling region of the current active window does not change according to the first image and the image which is cached last time, calculate the first emerging pixel information according to the first image and the image which is sent to the thin client last time, and send the calculated first emerging pixel information to the thin client.

In the device of the embodiment of the present disclosure, a function of the calculation module 300 for calculating the first emerging pixel information according to the first image and the image which is sent to the thin client last time may be arranged to:
judge that an image corresponding to the scrolling region is moved downwards (or moved leftwards) according to the first scrolling direction, check whether or not the first row (or column) of the image which is sent to the thin client last time matches the nth row (or column) of the first image, and when the first row (or column) of the image which is sent to the thin client last time matches the nth row (or column) of the first image, determine the first emerging pixel information to be first to (n-1)th rows (or columns) of the first image; when the first row (or column) of the image which is sent to the thin client last time does not match the nth row (or column) of the first image, continue checking whether or not the first row (or column) of the image which is sent to the thin client last time matches the (n+1)th row (or column) of the first image; and when the first row (or column) of the image which is sent to the thin client last time does not match any row (or column) of the first image, determine the first emerging pixel information to be the first image, where n is a positive integer, and x is a positive integer more than 2.

In the device of the embodiment of the present disclosure, a function of the calculation module 300 for calculating the first emerging pixel information according to the first image and the image which is sent to the thin client last time may be arranged to:
judge that an image corresponding to the scrolling region is moved upwards (or moved rightwards) according to the first scrolling direction, check whether or not the mth row (or column) of the image which is sent to the thin client last time matches the nth row (or column) of the first image, and when the mth row (or column) of the image which is sent to the thin client last time matches the nth row (or column) of the first image, determine the first emerging pixel information to be the nth to mth rows (or columns) of the first image; when the mth row (or column) of the image which is sent to the thin client last time does not match the nth row (or column) of the first image, continue checking whether or not the mth row (or column) of the image which is sent to the thin client last time matches the (n-1)th row (or column) of the first image; and when the mth row (or column) of the image which is sent to the thin client last time does not match any row (or column) of the first image, determine the first emerging pixel information to be the first image, where m is the total row (or column) number of the image which is cached last time.

In the device of the embodiment of the present disclosure, the calculation module 300 is further arranged to:
detect that a window in the virtual desktop changes from an inactive window into a current active window, acquire an application type of the current active window, and search in locally stored application types for the application type of the current active window, and when the application type of the current active window is found, cache an image corresponding to a scrolling region of the current active window, and send the image corresponding to the scrolling region of the current active window to the thin client.

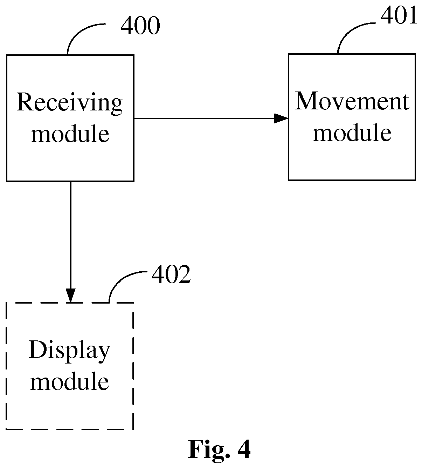

Referring to Fig. 4, an embodiment of the present disclosure provides a device for updating a virtual desktop, which may at least include a receiving module 400 and a movement module 401.

The receiving module 400 is arranged to receive a first offset and a first scrolling direction or a second offset and a second scrolling direction from a server.

The movement module 401 is arranged to judge that a scrolling region of a current active window is moved downwards (or moved upwards) according to the received first scrolling direction or second scrolling direction, and uniformly move downwards (or move upwards) the scrolling region until the number of rows moved downwards (or moved upwards) is equal to the received first offset or second offset.

In the device of the embodiment of the present disclosure, the movement module 401 may be further arranged to:
judge that the scrolling region of the current active window is moved leftwards (or moved rightwards) according to the received first scrolling direction or second scrolling direction, and uniformly move leftwards (or move rightwards) the scrolling region until the number of columns moved leftwards (or moved rightward) is equal to the received first offset or second offset.

In the device of the embodiment of the present disclosure, the receiving module 400 may be further arranged to:
receive first emerging pixel information or second emerging pixel information from the server.

The thin client may further include a display module 402.

The display module 402 is arranged to display the received first emerging pixel information or second emerging pixel information on pixels emerging in an upward movement or downward movement or leftward movement or rightward movement process.

It is important to note that the abovementioned embodiments are intended not to limit the scope of protection of the present disclosure but to facilitate understanding of those skilled in the art, and any apparent replacements, improvements and the like made to the present disclosure by those skilled in the art without departing from the inventive concept of the present disclosure shall fall within the scope of protection of the present disclosure.

### Industrial Applicability

According to the technical solutions, when receiving the first scrolling command, the server only sends the first offset and the first scrolling direction to the thin client, and then continues detecting whether the second scrolling command is received or not within the preset time. When the server does not receive the second scrolling command within the preset time, the server calculates the first emerging pixel information according to the first image which is cached this time and the image which is sent to the thin client last time, and sends the calculated first emerging pixel information to the thin client. By virtue of the technical solution, it is not necessary send an image corresponding to the changed virtual desktop to the thin client every time when a scrolling command is received, so that bandwidth waste for the virtual desktop is reduced, and a bandwidth is further saved.

## Claims

1. A method for updating a virtual desktop, comprising:
when receiving a first scrolling command, calculating, by a server, a first offset corresponding to the received first scrolling command;
sending, by the server, the calculated first offset and a first scrolling direction contained in the received first scrolling command to a thin client; and
detecting, by the server, whether the server receives a second scrolling command within a preset time, and when the server does not receive the second scrolling command within the preset time, calculating, by the server, first emerging pixel information according to a first image which is cached this time and an image which is sent to the thin client last time, and sending, by the server, the calculated first emerging pixel information to the thin client.

2. The method as claimed in claim 1, further comprising:
when the server receives the second scrolling command within the preset time, caching, by the server, a second image corresponding to a scrolling region of a current active window, judging, by the server according to the second image and the first image, that the scrolling region of the current active window changes, calculating, by the server, a second offset according to the second image and the first image, and sending, by the server, the calculated second offset and a second scrolling direction contained in the received second scrolling command to the thin client; and
continuing detecting, by the server, whether the server receives a third scrolling command within the preset time.

3. The method as claimed in claim 2, further comprising:
when the server judges, according to the second image and the first image, that the scrolling region of the current active window does not change,
calculating, by the server, second emerging pixel information according to the second image and the image which is sent to the thin client last time, and sending, by the server, the calculated second emerging pixel information to the thin client.

4. The method as claimed in claim 1 or 2, wherein calculating the first offset corresponding to the received first scrolling command comprises:
caching, by the server, the first image corresponding to a scrolling region of a current active window; and
when the server judges, according to the first image which is cached this time and the image which is sent to the thin client last time, that the scrolling region of the current active window changes, calculating, by the server, the first offset according to the first image which is cached this time and the image which is sent to the thin client last time.

5. The method as claimed in claim 4, wherein judging, by the server according to the first image which is cached this time and the image which is sent to the thin client last time, whether the scrolling region of the current active window changes or not comprises:
checking, by the server, whether or not each row or column of the image which is sent to the thin client last time matches a corresponding row or column of the first image, and when all rows or columns of the image which is sent to the thin client last time match corresponding rows or columns of the first image, judging, by the server, that the scrolling region of the current active window does not change; and when a certain row or column of the image which is sent to the thin client last time does not match a corresponding row or column of the first image, judging, by the server, that the scrolling region of the current active window changes.

6. The method as claimed in claim 4, wherein calculating, by the server, the first offset according to the first image and the image which is sent to the thin client last time comprises:
judging, by the server, that an image corresponding to the scrolling region is moved downwards or leftwards according to the first scrolling direction, checking, by the server, whether or not a first row or column of the image which is sent to the thin client last time matches an nth row or column of the first image, when the first row or column of the image which is sent to the thin client last time matches the nth row or column of the first image, checking, by the server, whether or not second to (2+x)th rows or columns of the image which is sent to the thin client last time match (n+1)th to (n+1+x)th rows or columns of the first image, and when all of the second to (2+x)th rows or columns of the image which is sent to the thin client last time match the (n+1)th to (n+1+x)th rows or columns of the first image, determining, by the server, the first offset to be (n-1),
where n is a positive integer, and x is a positive integer more than 2.

7. The method as claimed in claim 6, further comprising:
when the first row or column of the image which is sent to the thin client last time does not match the nth row or column of the first image,
continuing checking, by the server, whether or not the first row or column of the image which is sent to the thin client last time matches an (n+1)th row or column of the first image.

8. The method as claimed in claim 4, wherein calculating, by the server, the first offset according to the first image which is cached this time and the image which is sent to the thin client last time comprises:
judging, by the server, that an image corresponding to the scrolling region is moved upwards or moved rightwards according to the first scrolling direction, checking, by the server, whether or not an mth row or column of the image which is sent to the thin client last time matches an nth row or column of the first image, when the mth row or column of the image which is sent to the thin client last time matches the nth row or column of the first image, checking, by the server, whether or not (m-1-x)th to (m-1)th rows or columns of the image which is sent to the thin client last time match (n-1-x)th to (n-1)th rows or columns of the first image, and when all of the (m-1-x)th to (m-1)th rows or columns of the image which is sent to the thin client last time match the (n-1-x)th to (n-1)th rows or columns of the first image, determining, by the server, the first offset to be (m-n),
where n is a positive integer, x is a positive integer more than 2, m is a total number of rows or columns of the image which is sent to the thin client last time, and m is more than n.

9. The method as claimed in claim 8, further comprising:
when the mth row or column of the image which is sent to the thin client last time does not match the nth row or column of the first image, continuing checking, by the server, whether or not the mth row or column of the image which is sent to the thin client last time matches an (n-1)th row or column of the first image.

10. The method as claimed in claim 1 or 2, wherein calculating, by the server, the first emerging pixel information according to the first image which is cached this time and the image which is sent to the thin client last time comprises:
judging, by the server, that an image corresponding to the scrolling region is moved downwards or leftwards according to the first scrolling direction, checking, by the server, whether or not a first row or column of the image which is sent to the thin client last time matches an nth row or column of the first image, and when the first row or column of the image which is sent to the thin client last time matches the nth row or column of the first image, determining, by the server, the first emerging pixel information to be first to (n-1)th rows or columns of the first image; when the first row or column of the image which is sent to the thin client last time does not match the nth row or column of the first image, continuing checking, by the server, whether or not the first row or column of the image which is sent to the thin client last time matches an (n+1)th row or column of the first image; and when the first row or column of the image which is sent to the thin client last time does not match any row or column of the first image, determining, by the server, the first emerging pixel information to be the first image, where n is a positive integer, and x is a positive integer more than 2.

11. The method as claimed in claim 10, wherein calculating, by the server, the first emerging pixel information according to the first image which is cached this time and the image which is sent to the thin client last time comprises:
judging, by the server, that an image corresponding to the scrolling region is moved upwards or moved rightwards according to the first scrolling direction, checking, by the server, whether or not an mth row or column of the image which is sent to the thin client last time matches an nth row or column of the first image, and when the mth row or column of the image which is sent to the thin client last time matches the nth row or column of the first image, determining, by the server, the first emerging pixel information to be the nth to mth rows or columns of the first image; when the mth row or column of the image which is sent to the thin client last time does not match the nth row or column of the first image, continuing checking, by the server, whether or not the mth row or column of the image which is sent to the thin client last time matches an (n-1)th row or column of the first image; and when the mth row or column of the image which is sent to the thin client last time does not match any row or column of the first image, determining, by the server, the first emerging pixel information to be the first image, where m is a total number of rows or columns of the image which is sent to the thin client last time, and m is more than n.

12. The method as claimed in claim 2, wherein calculating, by the server, the second offset according to the second image and the first image comprises:
judging, by the server, that an image corresponding to the scrolling region is moved downwards or leftwards according to the second scrolling direction, checking, by the server, whether or not a first row or column of the first image matches an nth row or column of the second image, when the first row or column of the first image matches the nth row or column of the second image, checking, by the server, whether or not second to (2+x)th rows or columns of the second image match (n+1)th to (n+1+x)th rows or columns of the first image, and when all of the second to (2+x)th rows or columns of the second image match the (n+1)th to (n+1+x)th rows or columns of the first image, determining, by the server, the second offset to be (n-1),
where n is a positive integer, and x is a positive integer more than 2.

13. The method as claimed in claim 12, further comprising:
when the first row or column of the first image does not match the nth row or column of the second image, continuing checking, by the server, whether or not the first row or column of the first image matches an (n+1)th row or column of the second image.

14. The method as claimed in claim 2, wherein calculating, by the server, the second offset according to the second image and the first image comprises:
judging, by the server, that an image corresponding to the scrolling region is moved upwards or moved rightwards according to the second scrolling direction, checking, by the server, whether or not an mth row or column of the first image matches an nth row or column of the second image, when the mth row or column of the first image matches the nth row or column of the second image, checking, by the server, whether or not (m-1-x)th to (m-1)th rows or columns of the first image match (n-1-x)th to (n-1)th rows or columns of the second image, and when all of the (m-1-x)th to (m-1)th rows or columns of the first image match the (n-1-x)th to (n-1)th rows or columns of the second image, determining, by the server, the second offset to be (m-n), where n is a positive integer, x is a positive integer more than 2, m is a total number of rows or columns of the first image, and m is more than n.

15. The method as claimed in claim 14, further comprising:
when the mth row or column of the first image does not match the nth row or column of the second image, continuing checking, by the server, whether or not the mth row or column of the first image matches an (n-1)th row or column of the second image.

16. The method as claimed in claim 1 or 2, further comprising:
when a window in the virtual desktop changes from an inactive window into a current active window, acquiring, by the server, an application type of the current active window, and searching, by the server, in locally stored application types for the application type of the current active window, and when the application type of the current active window is found, caching, by the server, an image corresponding to a scrolling region of the current active window, and sending the image corresponding to the scrolling region of the current active window to the thin client.

17. A method for updating a virtual desktop, comprising:
receiving, by a thin client, a first offset and a first scrolling direction from a server or receiving, by a thin client, a second offset and a second scrolling direction from a server, judging, by the thin client, that a scrolling region of a current active window is moved downwards or upwards according to the received first scrolling direction or second scrolling direction, and uniformly moving, by the thin client, downwards or upwards the scrolling region according to a judgment result until the number of rows moved downwards or upwards is equal to the received first offset or second offset.

18. The method as claimed in claim 17, further comprising:
when the thin client judges that the scrolling region of the current active window is moved leftwards or rightwards according to the received first scrolling direction or second scrolling direction, uniformly moving, by the thin client, leftwards or rightwards the scrolling region according to a judgment result until the number of columns moved leftwards or rightwards is equal to the received first offset or second offset.

19. The method as claimed in claim 17, further comprising:
when the thin client receives first emerging pixel information or second emerging pixel information from the server, displaying, by the thin client, the received first emerging pixel information or second emerging pixel information on pixels emerging in an upward movement or downward movement or leftward movement or rightward movement process.

20. A device for updating a virtual desktop, comprising:
a calculation module, arranged to, when receiving a first scrolling command, calculate a first offset corresponding to the received first scrolling command, detect whether a second scrolling command is received within a preset time, and when the second scrolling command is not received within the preset time, calculate first emerging pixel information according to a first image which is cached this time and an image which is sent to the thin client last time; and
a sending module, arranged to send the calculated first offset and a first scrolling direction contained in the received first scrolling command to a thin client, and send the calculated first emerging pixel information to the thin client.

21. The device as claimed in claim 20, wherein
the calculation module is further arranged to, when the second scrolling command is received within the preset time, cache a second image corresponding to a scrolling region of a current active window, judge, according to the second image and the first image, that the scrolling region of the current active window changes, calculate a second offset according to the second image and the first image, and after the sending module sends the calculated second offset and a second scrolling direction contained in the received second scrolling command to the thin client,
continue detecting whether a third scrolling command is received or not within the preset time; and
the sending module is further arranged to:
send the calculated second offset and the second scrolling direction contained in the received second scrolling command to the thin client.

22. The device as claimed in claim 21, wherein
the calculation module is further arranged to:
judge, according to the second image and the first image, that the scrolling region of the current active window does not change, and calculate second emerging pixel information according to the second image and the image which is sent to the thin client last time; and
the sending module is further arranged to:
send the calculated second emerging pixel information to the thin client.

23. The device as claimed in claim 20 or 21, wherein a function of the calculation module for calculating the first offset corresponding to the received first scrolling command is arranged to:
cache the first image corresponding to a scrolling region of a current active window; and when it is judged, according to the first image which is cached this time and the image which is sent to the thin client last time, that the scrolling region of the current active window changes, calculate the first offset according to the first image which is cached this time and the image which is sent to the thin client last time.

24. The device as claimed in claim 23, wherein a function of the calculation module for judging, according to the first image which is cached this time and the image which is sent to the thin client last time, whether the scrolling region of the current active window changes or not is arranged to:
check whether or not each row or column of the image which is sent to the thin client last time matches a corresponding row or column of the first image, and when all rows or columns of the image which is sent to the thin client last time match corresponding rows or columns of the first image, judge that the scrolling region of the current active window does not change; and when a certain row or column of the image which is sent to the thin client last time does not match a corresponding row or column of the first image, judge that the scrolling region of the current active window changes.

25. The device as claimed in claim 23, wherein a function of the calculation module for calculating the first offset according to the first image and the image which is sent to the thin client last time is arranged to:
judge that an image corresponding to the scrolling region is moved downwards or leftwards according to the first scrolling direction, check whether or not a first row or column of the image which is sent to the thin client last time matches an nth row or column of the first image, when the first row or column of the image which is sent to the thin client last time matches the nth row or column of the first image, check whether or not second to (2+x)th rows or columns of the image which is sent to the thin client last time match (n+1)th to (n+1+x)th rows or columns of the first image, and when all of the second to (2+x)th rows or columns of the image which is sent to the thin client last time match the (n+1)th to (n+1+x)th rows or columns of the first image, determine the first offset to be (n-1),
where n is a positive integer, and x is a positive integer more than 2.

26. The device as claimed in claim 23, wherein a function of the calculation module for calculating the first offset according to the first image and the image which is sent to the thin client last time is arranged to:
judge that an image corresponding to the scrolling region is moved upwards or moved rightwards according to the first scrolling direction, check whether or not an mth row or column of the image which is sent to the thin client last time matches an nth row or column of the first image, when the mth row or column of the image which is sent to the thin client last time matches the nth row or column of the first image, check whether or not (m-1-x)th to (m-1)th rows or columns of the image which is sent to the thin client last time match (n-1-x)th to (n-1)th rows or columns of the first image, and when all of the (m-1-x)th to (m-1)th rows or columns of the image which is sent to the thin client last time match the (n-1-x)th to (n-1)th rows or columns of the first image, determine the first offset to be (m-n),
where n is a positive integer, x is a positive integer more than 2, m is a total number of rows or columns of the image which is sent to the thin client last time, and m is more than n.

27. The device as claimed in claim 23, wherein a function of the calculation module for calculating the first emerging pixel information according to the first image which is cached this time and the image which is sent to the thin client last time is arranged to:
judge that an image corresponding to the scrolling region is moved downwards or leftwards according to the first scrolling direction, check whether or not a first row or column of the image which is sent to the thin client last time matches an nth row or column of the first image, and when the first row or column of the image which is sent to the thin client last time matches the nth row or column of the first image, determine the first emerging pixel information to be first to (n-1)th rows or columns of the first image; when the first row or column of the image which is sent to the thin client last time does not match the nth row or column of the first image, continue checking whether or not the first row or column of the image which is sent to the thin client last time matches an (n+1)th row or column of the first image; and when the first row or column of the image which is sent to the thin client last time does not match any row or column of the first image, determine the first emerging pixel information to be the first image, where n is a positive integer, and x is a positive integer more than 2.

28. The device as claimed in claim 23, wherein a function of the calculation module for calculating the first emerging pixel information according to the first image which is cached this time and the image which is sent to the thin client last time is arranged to:
judge that an image corresponding to the scrolling region is moved upwards or moved rightwards according to the first scrolling direction, check whether or not an mth row or column of the image which is sent to the thin client last time matches an nth row or column of the first image, and when the mth row or column of the image which is sent to the thin client last time matches the nth row or column of the first image, determine the first emerging pixel information to be the nth to mth rows or columns of the first image; when the mth row or column of the image which is sent to the thin client last time does not match the nth row or column of the first image, continue checking whether or not the mth row or column of the image which is sent to the thin client last time matches an (n-1)th row or column of the first image; and when the mth row or column of the image which is sent to the thin client last time does not match any row or column of the first image, determine the first emerging pixel information to be the first image, where m is a total number of rows or columns of the image which is sent to the thin client last time, and m is more than n.

29. The device as claimed in claim 21, wherein a function of the calculation module for calculating the second offset according to the second image and the first image is arranged to:
judge that an image corresponding to the scrolling region is moved downwards or leftwards according to the second scrolling direction, check whether or not a first row or column of the first image matches an nth row or column of the second image, when the first row or column of the first image matches the nth row or column of the second image, check whether or not second to (2+x)th rows or columns of the first image match (n+1)th to (n+1+x)th rows or columns of the second image, and when all of the second to (2+x)th rows or columns of the first image match the (n+1)th to (n+1+x)th rows or columns of the second image, determine the second offset to be (n-1),
where n is a positive integer, and x is a positive integer more than 2.

30. The device as claimed in claim 21, wherein a function of the calculation module for calculating the second offset according to the second image and the first image is arranged to:
judge that an image corresponding to the scrolling region is moved upwards or moved rightwards according to the second scrolling direction, check whether or not an mth row or column of the first image matches an nth row or column of the second image, when the mth row or column of the first image matches the nth row or column of the second image, check whether or not (m-1-x)th to (m-1)th rows or columns of the first image match (n-1-x)th to (n-1)th rows or columns of the second image, and when all of the (m-1-x)th to (m-1)th rows or columns of the first image match the (n-1-x)th to (n-1)th rows or columns of the second image, determine the second offset to be (m-n), where n is a positive integer, x is a positive integer more than 2, m is a total number of rows or columns of the first image, and m is more than n.

31. The device as claimed in claim 20 or 21, wherein the calculation module is further arranged to:
detect that a window in the virtual desktop changes from an inactive window into a current active window, acquire an application type of the current active window, and search in locally stored application types for the application type of the current active window, and when the application type of the current active window is found, cache an image corresponding to a scrolling region of the current active window, and send the image corresponding to the scrolling region of the current active window to the thin client.

32. A device for updating a virtual desktop, comprising:
a receiving module, arranged to receive a first offset and a first scrolling direction from a server, or receive a second offset and a second scrolling direction from a server; and
a movement module, arranged to judge that a scrolling region of a current active window is moved downwards or upwards according to the received first scrolling direction or second scrolling direction, and uniformly move downwards or upwards the scrolling region according to a judgment result until the number of rows moved downwards or upwards is equal to the received first offset or second offset.

33. The device as claimed in claim 32, wherein the movement module is further arranged to:
judge that the scrolling region of the current active window is moved leftwards or rightwards according to the received first scrolling direction or second scrolling direction, and uniformly move leftwards or rightwards the scrolling region according to a judgment result until the number of columns moved leftwards or rightwards is equal to the received first offset or second offset.

34. The device as claimed in claim 32, wherein the receiving module is further arranged to:
receive first emerging pixel information or second emerging pixel information from the server; and
the device for updating the virtual desktop further comprises:
a display module, arranged to display the received first emerging pixel information or second emerging pixel information on pixels emerging in an upward movement or downward movement or leftward movement or rightward movement process.

35. A computer program, comprising program instructions which, when executed by a server, enable the server to execute the method as claimed in any one of claims 1-16.

36. A carrier carrying the computer program as claimed in claim 35.

37. A computer program, comprising program instructions which, when executed by a server, enable the server to execute the method as claimed in any one of claims 17-19.

38. A carrier carrying the computer program as claimed in claim 37.
